# EUROPEAN PATENT SPECIFICATION

(11) **EP 1 610 620 B1**
(45) Date of publication and mention of the grant of the patent: **12.09.2007**
(21) Application number: 04722615.4
(22) Date of filing: 23.03.2004
(51) Int. Cl.: A23G 3/00

(54) **PROCESS FOR THE PREPARATION OF CONFECTIONERY PRODUCTS CONTAINING FLORAL MATERIAL**
VERFAHREN ZUR HERSTELLUNG VON BLÜTENMATERIAL ENTHALTENDEN KONDITORWAREN
PROCEDE DE PREPARATION DE PRODUITS DE CONFISERIE CONTENANT DES MATIERES D'ORIGINE FLORALE

(30) Priority: 07.04.2003 IT RM20030158
(43) Date of publication of application: 04.01.2006
(73) Proprietor: Roverio, Gianluigi, 18038 Sanremo (IT)
(72) Inventor: Roverio, Gianluigi, 18038 Sanremo (IT)
(74) Representative: Botti, Mario
(86) International application number: PCT/IB2004/050318
(87) International publication number: WO 2004/089100

(56) References cited:
- WO-A-90/01270
- DE-A- 3 612 184
- FR-A- 1 401 169
- US-A- 3 060 033
- US-A- 4 344 972
- US-A- 5 601 866
- PATENT ABSTRACTS OF JAPAN vol. 014, no. 053 (C-0683), 31 January 1990 (1990-01-31) & JP 01 281036 A (TAKUJI ONO), 13 November 1989 (1989-11-13)

## Description

### PRIOR STATE OF THE ART

The present invention relates to a process for the preparation of a sugary solution containing floral material suitable for the preparation of confectionery materials.

The use of flowers or of floral material in nutrition has always been quite limited, deputed, save from rare instances in which flower aromas are used in pastry making, to carry out decorative rather than substantial tasks. In the field of the confectionery products, though floral aromas are seldom used, the use of floral material, like petals, apexes or whole flowers, as base material for the preparation of said products has never been resorted to. In fact, flowers are generally used, also in the confectionery field, exclusively for their decorative features, and upon attaining the desired aesthetical effect are removed from the confectionery product. With the exception of candied flowers, which are used for decorative purposes and are also edible, generally the flower is not the basic ingredient, as is the fruit, in the manufacture of confectionery products. However, confectionery products are also manufactured in which some floral aromas are used. Of late the so-called 'natural' products, that is, all those products comprising the smallest number possible of non-natural substances are being increasingly appreciated. Therefore, there still subsists the problem of providing novel 'natural' products as an alternative to the existing marketed natural and non-natural ones. One of the fields in which the products are highly "sophisticated", i.e., subjected to several processings and/or containing several artificial substances, is indeed the confectionery field, in which aromas and colours are essential in order to catch the consumer's attention. Considering that children are amongst the greatest consumers of confectionery products, it is strongly desirable to provide confectionery products containing as much of natural substances as possible and as little of artificial substances as possible.

### SUMMARY OF THE INVENTION

The present invention provides the means for manufacturing confectionery products containing a natural material that can be counted among the most aromatic, colourful and varied in nature: the floral material. In the present invention, flowers grown not for decorative use but rather for a use suitable for the manufacture of edible material are used for the production of an edible sugary solution containing floral material, suitable for the manufacture of confectionery products. Hence, object of the present invention is a process for the preparation of an edible sugary solution containing floral material, consisting in the following steps:
a. harvesting fresh floral material cultivated with cultivation techniques suitable for the production of material intended for human nutrition;
b. fragmenting said floral material and introducing it in an edible sugary solution;
c. pasteurising said solution by heating said solution for a period of time ranging from 20 to 30 min at a temperature ranging from about 70°C to about 90°C and rapidly cooling said solution at a temperature ranging from about 10°C to about 0°C.
   Optionally, after step c. there may be carried out a further step
d. of processing said solution, in case together with further ingredients, to obtain confectionery products.

A further object of the invention is an edible sugary solution containing floral material obtainable by the above-described process with the steps a. to c. The solution obtainable with said process can be used, according to the invention, for the manufacture of confectionery products containing floral material, optionally in conjunction with one or more aromas, natural and/or non-natural, suitable food ingredients and excipients, acidifiers and preservatives.

Therefore, object of the invention are also the confectionery products obtainable from the above described process, wherein steps a. to d. are carried out; these products can be jellies, candies or toffees, lollipops, jams, marmalades, chocolates, biscuits, wafers, snacks, sweets, candy grains for cakes, ice creams, water ices, sorbets, puddings, creams, candy floss, liquorices, chewing gums, syrups for beverages, beverages, yoghurts, milk-based products, fresh or seasoned cheeses.

Lastly, object of the invention are confectionery products, as the ones listed above, containing floral material comprising the edible sugary solution of the invention, optionally in combination with one or more aromas, natural and/or non-natural, suitable food ingredients and excipients, natural and/or non-natural colorants, acidifiers and preservatives.

### DETAILED DESCRIPTION OF THE INVENTION

Step a. of the process of the invention is of fundamental importance, as the cultivation of the floral material and the time of its harvesting are essential to a correct realization of the invention. In order to obtain from the floricultural produce a product that can be intended for human nutrition, it is necessary that at the time of harvesting the fraction of said material intended for consumption exhibits no trace or residue of the plant protection products normally used in floriculture. In the present invention, the normal cultivation techniques for cut flower production are not carried out. The cultivation technique of the present invention resembles as much as possible cultivation technologies more alike those normally used in the horticultural field. In an embodiment of the invention, organic farming techniques are used. In fact, for some families or species, it is possible to use organic farming techniques by cultivating the plants without forcing, observing the planting distances in order to ensure the right development of the plant and reinforce its defences toward pathogens. The cultivation can be effected by ploughing in, at soil preparation, compost at a dosage of about two-hundred kilograms/ha and administering, when necessary (on the basis of soil analysis or of any foliar analysis), in the course of the cultivation, salts of potassium and magnesium (e.g. potassium sulfate and magnesium sulfate) or other fertilizers allowed by EEC regulation 2078/92 attachment a. In the course of the cultivation the main fungal adversities may be fought with salts of copper (against peronospora or as canker disinfectant), sulfur and *Ampelomyces quisqualis* (against Oidium), *Trichoderma harzianum* (against Botrytis) whereas against insects there may be used paraffin oil, pinolene, Neem oil, Rotenone, *Bacillus thuringiensis, Beauveria bassiana* and several other products allowed by EEC regulation 2078/92 attachment b. For cultivation and plant defence there may be used products allowed by EEC regulation 2078/92 and attachments, i.e., sulfur, copper, Rotenone, Neem oil, *Bacillus thurigiensis, Ampelomyces quisqualis* and any other allowed for plant defence.

On the basis of the teachings of the present invention it is possible to use any floral material for the preparation of the sugary solution of the invention, however in the preferred embodiments it is particularly suitable the floral material belonging to the following families:
- *Gentianaceae* (e.g., gentian)
- *Fabaceae* (partly *Leguminosae)* (e.g., birdfoot trefoil)
- *Leguminosae* (e.g., mimosa (acacia), broom, wisteria)
- *Tiliaceae* (e.g., lime tree)
- *Primulaceae* (e.g., primrose)
- *Compositae* (e.g., daisy, calendula, marigold, sunflower-genus helianthus-100
   species, chrysanthemum, solidago (goldenrod), zinnia, yarrow, cornflower)
- *Rosaceae* (e.g., rose, hawthorn, peach tree, almond tree, almond leaved pear)
- *Scrophulariaceae* (e.g., snapdragons)
- *Liliaceae* (e.g., lilium, hyacinth, tulip)
- *Hypericaceae* (*Guttiferae*) (e.g., hypericum)
- *Oleaceae* (e.g., lilac, forsythia, jasmin)
- *Cannabaceae* (e.g., hop)
- *Labiatae* (e.g., lavender,
- *Violaceas* (e.g., pansy, sweet violet, violet)
- *Gesneriaceae* (e.g., African violet)
- *Iriaceae* (e.g., iris (*iris pallida lam.),* Blue iris, iris, sword lily, freesia)
- *Amaranthaceae* (e.g., pigweed)
- *Passifloraceae* (e.g., passionflower)
- *Caryophylaceae* (e.g., carnation)
- *Hypericaceae* (e.g., hypericum)
- *Asteraceae (composiatae)* (e.g., pot marigold, curry plant, genepy, daisies)
- *Campanulaceae* (e.g., bellflower)
- *Amaryllidaceae* (e.g., narcissus, alstroemeria)
- *Brassicaceae* (*cruciferae*) (e.g., bittercrese, gillyflower)
- *Caprifoglieceae* (e.g., viburnum)
- Tropaeolaceae (e.g., nasturtium)
- *Ranunculaceae* (e.g., peony, ranunculus)
- *Lythraceae* (e.g., purple loosestrife)
- *Papaveraceae* (e.g., poppy)
- *Resedaceae* (e.g., weld)
- *Nyctaginaceae* (e.g., Four-o'clock)
- *Convolvulaceae* (e.g., convolvulus)

Hence, the floral material harvested in step a. of the process of the invention can be cultivated with organic farming techniques. In another embodiment of the invention the cultivation technique is not the organic one, but is anyhow a technique similar to that used in the horticultural production.

In fact, for those species where biological control does not suffice to obtain a suitable floral material, an integrated control is carried out using plant protection products in observance of their latency periods and exclusively insofar as necessary. For instance, in the *Rosaceae* there may be an onset of fungal diseases (e.g., *verticillum*) for which a control with biological products is not sufficient. In these cases, the use of suitable plant protection products (chemical fungicides) is advisable, always observing their latency periods; in fact, in these cases the products can anyhow be intended for human nutrition.

Therefore, according to the invention, the floral material harvested in step a of the process for the preparation of the sugary solution, is cultivated with techniques useful in the horticultural field for the manufacture of products that can be intended for human nutrition.

Moreover, in order to obtain a floral material of good quality, also environmental factors like the light, the temperature and the nourishment should be taken into account, striving above all to avoid the deficiencies of calcium and potassium which play an essential part in a good flower development. Moreover, in the cultivation of the floral material of the invention, vascular or root diseases causing mechanical occlusions in the vessels with a decrease in water absorption, and foliar diseases usually determining an increase in the production of ethylene causing petal shedding, especially in roses, should be avoided.

The ideal time to harvest the floral material used in the implementation of the invention is in the morning hours. As it is known, the morning flower is the most fragrant since the floral scents evaporate less with the cool of the night.

The harvesting should be carried out at the appropriate stage of flower development, which varies from species to species but can be generally defined as the time at which the first petals are completely extended and the full unfolding of the blossom begins. The floral material can also be harvested at a time subsequent to the one described above, in this case however the petals first unfolded should be discarded, as having already begun the drying process.

Moreover, since the development of some polyphenols in leaves is influenced by climatic conditions, it is preferable to harvest the floral material in late spring or early autumn rather than in early spring or late autumn. For the realization of the process of the invention, tips or petals or whole flowers or flower parts, may be used as floral material.

In an embodiment of the process of the invention, in said sugary solution, one or more aromas, natural or non-natural like the industrial ones commonly used in the agroindustrial field are added, in step b. or in step e. of said process.

The sugary solution in which the fresh floral material is introduced (step b. of the process of the invention) may contain monosaccharide sugars such as fructose, glucose, D-glucose, xylose, etc., polysaccharides like sucrose, maltose, etc., starch hydrolysates, alcohols of sugars like maltitol, xylitol, sorbitol and other sweeteners known to a person skilled in the art, alone or in combination thereamong. Examples of sugars suitable for said sugary solution are of common knowledge for a person skilled in the art. The choice of the percents of selected sugars will vary according to the final product that is to be obtained with the use of the solution, e.g. candies, toffees, fillings for chocolates, chewing gums, etc. The components for sugary solutions suitable for step a. of the process of the invention and their ratios, are known to a person skilled in the art. Examples of these components are mentioned in U.S. Patents 5,470,591, 6,241,788, 4,837,042 and 5,601,866.

In a preferred embodiment of the invention the sugary solution of step a. comprises a sucrose syrup of from about 40° to about 70°Brix.

The harvested material is fragmented in order to increase the exchange surface between the floral material and the sugary solution, and the fragmenting of the material may vary from a coarse fragmentation to an homogenation of the material itself.

Preferably, the pasteurising in step c. is carried out by heating the solution for a time of about 15 min. at a temperature of about 80°C and subsequently cooling rapidly. In an optimal realization of the process, the cooling is carried out at a temperature of about 4°C.

During the process from step b. to step c., there takes place an extraction of the various aromatic components of the floral material. Said aromatic components pass into the solution according to their solubility in water, hence in the solution various molecules like, e.g., the phenyl ethyl alcohol, the citronellol, the limonene, the geraniol and other different alcohols, esters, acids, etc., may be found given to the extreme variability of the molecules forming flower fragrance. The extraction, facilitated by the pasteurising process, goes on also in the subsequent resting phase, that varies according to the floral material used as the floral material remains in solution.

According to the invention, during the process described above, or in steps a. to c. or in step d., it is possible to add food preservatives like, e.g., citric acid or sodium benzoate.

Step d. of the process, i.e. that of processing the solution of the invention together with other ingredients to obtain confectionery products, varies according to the desired confectionery products. It is common knowledge for a person skilled in the art what ingredients and in which amount ought to be used according to the confectionery product to be produced. In the above mentioned U.S. Patents several embodiments are highlighted, like those for candies, aromatised, filled, spreadable chocolates, toffees, chewing gums, etc. Therefore, the solution of the invention should be processed according to the specific case and added to the ingredients commonly used for the manufacture of specific confectionery products in replacement of or in conjunction with the syrups commonly used to aromatise the confectionery product. When advisable, the solution of the invention could be dehydrated until yielding a solid, and subsequently be fragmented, granulated or powdered to use it for the preparation of confectionery products in which a dry product is preferable to a liquid one to give the desired aroma to the confectionery product.

In some embodiments the solution of the invention could be used for the manufacture of confectionery products containing floral material, like jellies, candies or toffees, lollipops, jams, marmalades, chocolates, biscuits, wafers, snacks, sweets, candy grains for cakes, ice creams, water ices, sorbets, puddings, creams, candy floss, liquorices, chewing gums, syrups for beverages, beverages, yoghurts, milk-based products, fresh or seasoned cheeses.

The following examples indicate some of the embodiments of the invention, without however limiting the other possible embodiments thereof.

### EXAMPLES:

### Example 1.

### Process for the preparation of an edible sugary solution containing floral material:

1-3 Kg of fresh floral material (tips, petals or whole flowers) cultivated so that it can be intended for human nutrition are harvested in late spring at the stage in which the first petals of the flower are completely extended and the blossom starts to unfold. Subsequently, said material is fragmented by means of a fast stirrer (Silverson or helical type) in a sucrose solution of about 70°Brix containing about 3 Kg sugar and about 1.3 Kg water.

Then, the obtained preparation is pasteurised by heating it to about 80°C (temperature referring to the central fraction of the mixture) for a maximum time of about 15 min, and rapidly cooling it down to about 4°C.

During the preparation there takes place an extraction of the various aromatic components contained in the floral material. Said components pass in the solution according to their solubility in water. The preparation thus obtained can be used as component of confectionery products in conjunction or not in conjunction with additional aromas strengthening its taste, incorporated prior to the pasteurising or thereafter.

### Example 2.

### Jellies manufacturing process:

To obtain about 1 Kg jellies, an aqueous sugary syrup (solution A) is prepared by dissolving about 386g glucose syrup (70 DE) and about 350 g sucrose in about 64g of hot water under fast stirring. Then, a solution (B) containing powdered pectin (about 17g) dispersed in sucrose (about 60g) is prepared and slowly added, under stirring, into about 360g hot water.

The pectin-containing solution (B) is brought to a boil for some minutes (about 3) then the aqueous syrup (solution A) is added and heating is resumed.

When the preparation reaches about 110°C, about the 4-8% of the solution yielded in example 1 is added. Subsequently, there may be added additional aromas, any natural colorants (in case the floral ones do not suffice) and citric acid.

After a fast homogenising the jellies are immediately cast in suitable starch moulds and rested.

### Example 3.

### Candies manufacturing process:

To obtain about 1 Kg candies, about 500g sucrose and about 500g glucose syrup 80°Brix, 43 Baumè (BE) are dissolved in about 200g water. The yielded solution is brought to about 140°C, under stirring, then about 4-8% of the solution of example 1 is added with any aromas, colorants in case the floral ones do not suffice and citric acid if necessary. After a fast homogenising, the preparation is immediately cast in suitable starch moulds.

## Claims

1. A process for the preparation of an edible sugary solution containing floral material of decorative flowers consisting in the following steps:
a. harvesting fresh floral material cultivated with cultivation techniques suitable for the production of material that can be intended for human nutrition ;
b. fragmenting said floral material and introducing it in an edible sugary solution;
c. pasteurising said solution by heating said solution for a period of time ranging from 10 to 20 min at a temperature ranging from about 70°C to about 90°C and rapidly cooling said solution at a temperature ranging from about 10°C to about 0°C.

2. The process according to claim 1, wherein the floral material harvested in step a. is cultivated with organic farming techniques.

3. The process according to claim 1, wherein the floral material harvested in step a. is cultivated with techniques useful in the horticultural field.

4. The process according to any one of the claims 1 to 3, wherein said floral material is harvested when the first petals are completely extended and the full unfolding of the blossom begins.

5. The process according to any one of the claims 1 to 3, wherein said floral material is harvested at full unfolding of the flowers and the petals first unfolded are discarded prior to proceeding with step b..

6. The process according to any one of the claims 1 to 5, wherein said floral material is harvested in late spring or early autumn.

7. The process according to any one of the claims 1 to 6, wherein said floral material comprises tips or petals or whole flowers or flower parts.

8. The process according to any one of the claims 1 to 7, wherein in said sugary solution there are added, in step b., one or more aromas, natural and/or non-natural.

9. The process according to any one of the claims 1 to 8, wherein said pasteurising is carried out by heating for a time of about 15 min at a temperature of about 80°C and cooling at a temperature of about 4°C.

10. A process for the preparation of confectionery products comprising the process according to any one of the claims 1 to 9, and after step c. a further step d. of processing said solution, in case together with further ingredients.

11. The process according to claim 10, wherein said ingredients comprise food preservatives and, optionally, one or more aromas natural and/or non-natural.

12. The edible sugary solution containing floral material obtainable with the process of the claims 1 to 9.

13. The use of the solution according to claim 12, for the manufacture of confectionery products containing floral material, optionally in conjunction with one or more aromas, natural and/or non-natural, food ingredients and excipients.

14. The use according to claim 13, wherein the confectionery products containing floral material are jellies, candies or toffees, lollipops, jams, marmalades, chocolates, biscuits, wafers, snacks, sweets, candy grains for cakes, ice creams, water ices, sorbets, puddings, creams, candy floss, liquorices, chewing gums, syrups for beverages, beverages, yoghurts, milk-based products, fresh or seasoned cheeses.

15. The confectionery products obtainable from the process according to claims 10 or 11.

16. The products according to claim 15, like jellies, candies or toffees, lollipops, jams, marmalades, chocolates, biscuits, wafers, snacks, sweets, candy grains for cakes, ice creams, water ices, sorbets, puddings, creams, candy floss, liquorices, chewing gums, syrups for beverages, beverages, yoghurts, milk-based products, fresh or seasoned cheeses.

17. The confectionery products containing floral material comprising the edible sugary solution of claim 12, optionally in conjunction with one or more aromas, natural and/or non-natural, food ingredients and excipients.

18. The products according to claim 17, like jellies, candies or toffees, lollipops, jams, marmalades, chocolates, biscuits, wafers, snacks, sweets, candy grains for cakes, ice creams, water ices, sorbets, puddings, creams, candy floss, liquorices, chewing gums, syrups for beverages, beverages, yoghurts, milk-based products, fresh or seasoned cheeses.

## Patentansprüche

1. Verfahren zur Herstellung einer essbaren zuckrigen Lösung beinhaltend Blumenmaterial von dekorativen Blumen umfassend die folgenden-Schritte:
a. Ernten von frischem Blumenmaterial, das mit Anbautechniken angebaut wurde, die für die Produktion von Material geeignet sind, das für die menschliche Ernährung gedacht ist;
b. Fragmentieren des Blumenmaterials und dessen Einbringen in eine essbare zuckrige Lösung;
c. Pasteurisieren der Lösung durch Erwärmen der Lösung über einen Zeitraum zwischen 10 und 20 Minuten bei einer Temperatur zwischen etwa 70°C und 90°C und schnelles Abkühlen der Lösung auf eine Temperatur zwischen etwa 10°C und 0°C.

2. Verfahren nach Anspruch 1, indem das im Schritt a. geerntete Blumenmaterial mit ökologischen Landbautechniken angebaut wurde.

3. Verfahren nach Anspruch 1, indem das im Schritt a. geerntete Blumenmaterial mit Techniken angebaut wurde, die auf dem Gebiet des Gartenbaus einsetzbar sind.

4. Verfahren nach irgendeinem der vorhergehenden Ansprüche 1 bis 3, indem das Blumenmaterial geerntet wird, wenn die ersten Blumenblätter vollständig entfaltet sind und die vollständige Entfaltung der Blüte beginnt.

5. Verfahren nach irgendeinem der vorhergehenden Ansprüche 1 bis 3, indem das Blumenmaterial bei vollständiger Entfaltung der Blumen geerntet wird und die Blumenblätter, die sich zuerst entfaltet haben, vor dem Fortfahren mit Schritt b. verworfen werden.

6. Verfahren nach irgendeinem der vorhergehenden Ansprüche 1 bis 5, indem das Blumenmaterial im späten Frühling oder im frühen Herbst geerntet wird.

7. Verfahren nach irgendeinem der vorhergehenden Ansprüche 1 bis 6, indem das Blumenmaterial Spitzen oder Blumenblätter oder ganze Blumen oder Blumenteile umfasst.

8. Verfahren nach irgendeinem der vorhergehenden Ansprüche 1 bis 7, indem zu der zuckrigen Lösung in Schritt b. ein oder mehrere Aromen, natürlicher und/oder nicht natürlicher Art hinzugefügt werden.

9. Verfahren nach irgendeinem der vorhergehenden Ansprüche 1 bis 8, indem das Pasteurisieren durch Erwärmen für eine Zeitdauer von etwa 15 Minuten bei einer Temperatur von ca. 80°C und das Abkühlen auf eine Temperatur von etwa 4°C durchgeführt wird.

10. Verfahren zur Herstellung von Süßwaren umfassend das Verfahren nach irgendeinem der vorhergehenden Ansprüche 1 bis 9 und nach Schritt c. einen weiteren Schritt d. der Verarbeitung der Lösung zusammen mit weiteren Zutaten.

11. Verfahren nach Anspruch 10, in dem die Zutaten Lebensmittelkonservierungsstoffe und optional ein oder mehrere natürliche und/oder nicht natürliche Aromen umfassen.

12. Essbare zuckrige Lösung beinhaltend Blumenmaterial erhältlich nach dem Verfahren der Ansprüche 1 bis 9.

13. Verwendung der Lösung nach Anspruch 12 für die Herstellung von Süßwaren beinhaltend Blumenmaterial, optional in Verbindung mit ein oder mehrere natürlichen und/oder nicht natürlichen Aromen, Lebensmittelzutaten und Hilfsstoffen.

14. Verwendung nach Anspruch 13, in dem die Blumenmaterial beinhaltenden Süßwaren Gelees, Bonbons oder Karamells, Lutscher, Konfitüren, Marmeladen, Schokoladen, Kekse, Waffeln, Imbisse, Süßigkeiten, Bonbonkörner für Kuchen, Eiscreme, Wasser-Eis, Sorbets, Puddings, Creme, Zuckerwatte, Lackritze, Kaugummi, Sirupe für Getränke, Getränke, Joghurts, milchbasierte Produkte, frische oder gealterte Käse sind.

15. Süßwaren erhältlich nach einem Verfahren gemäß Anspruch 10 oder 11.

16. Süßwaren gemäß Anspruch 15, wie Gelees, Bonbons oder Karamells, Lutscher, Konfitüren, Marmeladen, Schokoladen, Kekse, Waffeln, Imbisse, Süßigkeiten, Bonbonkörner für Kuchen,-Eiscreme, Wasser-Eis, Sorbet, Puddings, Creme, Zuckerwatte, Lackritze, Kaugummi, Sirupe für Getränke, Getränke, Joghurts, milchbasierte Produkte, frische oder gealterte Käse.

17. Süßwaren beinhaltend Blumenmaterial umfassend die essbare zuckrige Lösung von Anspruch 12 optional in Verbindung mit ein oder mehr natürlichen und/oder nicht natürlichen Aromen, Lebensmittelzutaten und Hilfsstoffen.

18. Produkte nach Anspruch 17, wie Gelees, Bonbons oder Karamells, Lutscher, Konfitüren, Marmeladen, Schokoladen, Kekse, Waffeln, Imbisse, Süßigkeiten, Bonbonkörner für Kuchen, Eiscreme, Wasser-Eis, Sorbet, Puddings, Creme, Zuckerwatte, Lackritze, Kaugummi, Sirupe für Getränke, Getränke, Joghurts, milchbasierte Produkte, frische oder gealterte Käse.

## Revendications

1. Procédé de préparation d'une solution sucrée comestible contenant une matière florale de fleurs décoratives comprenant les étapes suivantes :
a. récolter une matière florale fraîche cultivée à l'aide de techniques de culture appropriées à la production de la matière qui peut viser une nutrition pour l'homme;
b. fragmenter ladite matière florale et l'introduire dans une solution sucrée comestible ;
c. pasteuriser ladite solution en chauffant ladite solution pendant une période de temps allant de 10 à 20 min à une température allant d'environ 70°C à environ 90°C et refroidir rapidement ladite solution à une température allant d'environ 10°C à environ 0°C.

2. Procédé selon la revendication 1, dans lequel la matière florale récoltée à l'étape a. est cultivée à l'aide de techniques d'agriculture biologique.

3. Procédé selon la revendication 1, dans lequel la matière florale cultivée à l'étape a. est cultivée à l'aide de techniques utiles dans le domaine horticultural.

4. Procédé selon l'une quelconque parmi les revendications 1 à 3, dans lequel ladite matière florale est récoltée lorsque les premiers pétales sont complètement étendus et que l'ouverture complète des fleurs commence.

5. Procédé selon l'une quelconque parmi les revendications 1 à 3, dans lequel ladite matière florale est récoltée à l'ouverture complète des fleurs et les pétales ouverts en premier sont enlevés avant de passer à l'étape b.

6. Procédé selon l'une quelconque parmi les revendications 1 à 5, dans lequel ladite matière florale est récoltée à la fin de l'été ou au début de l'automne.

7. Procédé selon l'une quelconque parmi les revendications 1 à 6, dans lequel ladite matière florale comprend des pointes ou des pétales ou des fleurs entières ou des parties de fleurs.

8. Procédé selon l'une quelconque parmi les revendications 1 à 7, dans lequel dans ladite solution sucrée sont ajoutés, à l'étape b., un ou plusieurs arômes, naturels et/ou non naturels.

9. Procédé selon l'une quelconque parmi les revendications 1 à 8, dans lequel ladite pasteurisation est réalisée en chauffant pendant une durée d'environ 15 min à une température d'environ 80°C et en refroidissant à une température d'environ 4°C.

10. Procédé de préparation de produits de confiserie comprenant le procédé selon l'une quelconque parmi les revendications 1 à 9, et après l'étape c. une étape supplémentaire d. consistant à traiter ladite solution, dans ce cas avec des ingrédients supplémentaires.

11. Procédé selon la revendication 10, dans lequel lesdits ingrédients comprennent des conservateurs alimentaires et, de façon optionnelle, un ou plusieurs arômes naturels et/ou non naturels.

12. Solution sucrée comestible contenant une matière florale pouvant être obtenue par le procédé selon les revendications 1 à 9.

13. Utilisation de la solution selon la revendication 12, pour la fabrication de produits de confiserie contenant une matière florale, de façon optionnelle conjointement avec un ou plusieurs arômes, naturels et/ou non naturels, des ingrédients et des excipient alimentaires.

14. Utilisation selon la revendication 13, dans laquelle les produits de confiserie contenant une matière florale sont des gelées, des bonbons ou caramels, des sucettes, des confitures, des marmelades, des chocolats, des biscuits, des gaufrettes, des en-cas, des sucreries, des sucres à gros cristaux pour les gâteaux, des crèmes glacées, des glaces à l'eau, des sorbets, des crème-desserts, des crèmes, des barbes à papa, des réglisses, des gommes à mâcher, des sirops à boire, des boissons, des yaourts, des produits à base de lait, des fromages frais ou affinés.

15. Produits de confiserie pouvant être obtenus à partir du procédé selon les revendications 10 ou 11.

16. Produits selon la revendication 15, tels que des gelées, des bonbons ou caramels, des sucettes, des confitures, des marmelades, des chocolats, des biscuits, des gaufrettes, des en-cas, des sucreries, des sucres à gros cristaux pour les gâteaux, des crèmes glacées, des glaces à l'eau, des sorbets, des crème-desserts, des crèmes, des barbes à papa, des réglisses, des gommes à mâcher, des sirops à boire, des boissons, des yaourts, des produits à base de lait, des fromages frais ou affinés.

17. Produits de confiserie contenant une matière florale comprenant la solution sucrée comestible selon la revendication 12, de façon optionnelle conjointement avec un ou plusieurs arômes, naturels et/ou non naturels, des ingrédients et excipients alimentaires.

18. Produits selon la revendication 17, tels que des gelées, des bonbons ou caramels, des sucettes, des confitures, des marmelades, des chocolats, des biscuits, des gaufrettes, des en-cas, des sucreries, des sucres à gros cristaux pour les gâteaux, des crèmes glacées, des glaces à l'eau, des sorbets, des crème-desserts, des crèmes, des barbes à papa, des réglisses, des gommes à mâcher, des sirops à boire, des boissons, des yaourts, des produits à base de lait, des fromages frais ou affinés.
